# EUROPÄISCHE PATENTSCHRIFT

(11) **EP 3 138 733 B1**
(45) Veröffentlichungstag und Bekanntmachung des Hinweises auf die Patenterteilung: **03.10.2018**
(21) Anmeldenummer: 16184258.8
(22) Anmeldetag: 16.08.2016
(51) Int. Cl.: B60Q 1/24

(54) **LANDWIRTSCHAFTLICHES ARBEITSFAHRZEUG MIT EINER ANORDNUNG ZUR KONTROLLE EINER BELEUCHTUNGSEINRICHTUNG**
AGRICULTURAL WORK VEHICLE WITH SYSTEM FOR CONTROLLING A LIGHTING DEVICE
VEHICULE DE TRAVAIL AGRICOLE AVEC SYSTEME DE CONTROLE D'UN DISPOSITIF D'ECLAIRAGE

(30) Priorität: 03.09.2015 DE 102015216883
(43) Veröffentlichungstag der Anmeldung: 08.03.2017
(73) Patentinhaber: Deere & Company, Moline, IL 61265 (US)
(72) Erfinder: Gresch, Valentin, 67655 Kaiserslautern (DE)
(74) Vertreter: Holst, Sönke

(56) Entgegenhaltungen:
- EP-A1- 2 158 799
- EP-A1- 2 746 105
- EP-A2- 2 402 213
- DE-A1-102014 211 712

## Beschreibung

Die Erfindung betrifft ein landwirtschaftliches Arbeitsfahrzeug in Form eines Ackerschleppers mit einer Anordnung zur Kontrolle einer Beleuchtungseinrichtung.

### Stand der Technik

In der Landwirtschaft werden Arbeitsfahrzeuge, insbesondere Ackerschlepper, für unterschiedliche Aufgaben verwendet, beispielsweise für die Bodenbearbeitung, zum Ausbringen von Material, wie Saatgut oder Dünger, auf einem Feld, für Erntearbeiten oder für Transportarbeiten. Demnach sind unterschiedliche Geräte an das Arbeitsfahrzeug anzukoppeln, wie Pflüge, Sämaschinen, Düngerstreuer, Ballenpressen, Mähgeräte, angebaute Feldhäcksler oder Transportanhänger. Die Arbeitsfahrzeuge sind daher mit einer oder mehreren Schnittstellen ausgestattet, an denen unterschiedliche Geräte befestigt werden können. Derartige Schnittstellen können eine Anhängekupplung zum Anhängen z.B. eines Transportanhängers oder einer Ballenpresse, eine hintere Dreipunktkupplung an der Rückseite des Arbeitsfahrzeugs und/oder eine Dreipunktkupplung an der Vorderseite des Arbeitsfahrzeugs umfassen, die jeweils zur Anbringung nicht mit einer Deichsel angekoppelter Geräte dienen, z.B. von Mähgeräten, Feldhäckslern, Düngerstreuern, Sämaschinen oder Pflügen.

Beim Anbau der Geräte ist zunächst das Arbeitsfahrzeug in eine geeignete Stellung gegenüber dem Gerät zu fahren. Anschließend sind die Kupplungen derart zu verstellen, dass Verbindungselemente zwischen dem Arbeitsfahrzeug und dem Gerät geschlossen werden können. Schließlich erfolgt dann das Schließen der Verbindungselemente, um eine temporäre Ankopplung des Geräts an das Arbeitsfahrzeug zu bewerkstelligen. Diese Schritte erfolgen im Stand der Technik von einem Bedienerarbeitsplatz des Arbeitsfahrzeugs aus. Der Bediener fährt demnach zunächst das Arbeitsfahrzeug an eine geeignete Stelle in der Nähe des Geräts und verstellt dann die Kupplung gegenüber dem Arbeitsfahrzeug, indem er am Bedienerarbeitsplatz angeordnete Eingabeelemente zur Ansteuerung von fremdkraftbetätigten Aktoren zur Verstellung der Kupplung betätigt. Schließlich erfolgt dann die Verriegelung des Geräts an der Kupplung, was entweder ferngesteuert vom Bedienerarbeitsplatz oder direkt an Ort und Stelle durch manuelles Einwirken des Bedieners erfolgt. Dabei ist es für den Bediener nicht einfach, die korrekte Position der Kupplung gegenüber dem Gerät von seinem Bedienerarbeitsplatz aus zu erzielen, insbesondere in der Dunkelheit oder Dämmerung. Der Bediener muss somit öfter von seinem Bedienerarbeitsplatz hinunter steigen, um sich die Schnittstelle anzusehen und dann, nach Rückkehr am Bedienerarbeitsplatz, entsprechende Eingaben zur Ansteuerung des Aktors durchzuführen. Im Ergebnis ist das Ankoppeln der Geräte in vielen Fällen sehr zeitaufwändig.

Es wurden schon Anordnungen vorgeschlagen, bei denen zusätzliche Eingabeelemente zur Beeinflussung der Position von Kupplungen und zur Auswahl einer Übersetzungsstufe einschließlich einer Neutralstellung eines Zapfwellengetriebes an einem rückwärtigen Kotflügel des Arbeitsfahrzeugs angebracht sind (z.B. DE 10 2005 003 325 A1), die von einem rückwärtig bzw. seitlich des Arbeitsfahrzeugs stehenden Bediener betätigt werden können. Weiterhin wurden drahtgebundene oder drahtlose Fernbedienungen für landwirtschaftliche Arbeitsfahrzeuge vorgeschlagen, mit denen der Bediener von außerhalb des Bedienerarbeitsplatzes u.a. einen hydraulischen Kraftheber und eine Zapfwelle ansteuern kann (EP 1 004 230 A2, DE 102 17 398 A1, DE 10 2014 211 712 A1). Durch diese Bedienungsmöglichkeiten wird zwar die Einsehbarkeit der Schnittstelle verbessert, was aber bei Dämmerung oder Dunkelheit nicht in allen Fällen ausreicht, eine problemlose Ankupplung des Geräts zu bewerkstelligen. Die üblicherweise vorhandene Beleuchtung des Arbeitsfahrzeugs (DE 10 2007 013 810 A1, EP 2 402 213 A2) ist ausgelegt, das Umfeld des Arbeitsfahrzeugs und ggf. des Geräts bei der Straßenfahrt oder Feldarbeit zu beleuchten und leuchtet die Schnittstelle nicht besonders gut aus.

Neben den erwähnten Geräte-Schnittstellen der Arbeitsfahrzeuge sind beispielsweise bei Erntemaschinen auch Einstellungen von Betriebselementen des eigentlichen Arbeitsfahrzeugs vorzunehmen, bei einem Mähdrescher beispielsweise der Dreschkorbabstand oder die Sieböffnungsgröße. Wenn diese Einstellungen nicht vom Bedienerarbeitsplatz aus vorzunehmen sind, sondern an Ort und Stelle (sei es rein manuell oder mittels eines fremdkraftbetätigten Aktors) vorgenommen werden, benötigt der Bediener bei Dämmerung oder Dunkelheit eine Taschenlampe, um die Einstellung sehen zu können, oder es wird eine fest installierte Beleuchtung (vgl. DE 10 2007 007 385 A1 für die Beleuchtung eines Überkehrförderers) angebracht, die durch einen Schalter eingeschaltet wird, der zunächst auch erst aufgefunden werden muss.

Es sind auch Beleuchtungen für Arbeitsfahrzeuge beschrieben worden, die durch einen Dämmerungsschalter und einen Bewegungsmelder gesteuert werden, um dem Bediener bei Dunkelheit das Erreichen und Verlassen des Arbeitsplatzes zu erleichtern, indem der Zugangsweg ausgeleuchtet wird (DE 10 2010 052 825 A1, EP 2 548 430 A1). Dadurch wird das erwähnte Problem nicht gelöst.

Die EP 2 158 799 A1 beschreibt ein landwirtschaftliches Fahrzeug, das mit einer oder mehreren Beleuchtungseinrichtungen ausgestattet ist, die abhängig von einem erkannten Betriebszustand des Fahrzeugs eingeschaltet wird, um dem Bediener die Arbeit zu erleichtern. Im Falle eines Mähdreschers kann beispielsweise das Feld an der Rückseite des Mähdreschers beleuchtet werden, wenn der Bediener einen Betriebsparameter des Strohhäckslers verstellt hat. Bei einem Feldhäcksler kann anhand eines Sensors die Position eines Auswurfkrümmers erkannt werden und bei ausgeschwenktem Auswurfkrümmer wird, da ein Überladevorgang auf ein Transportfahrzeug für Erntegut angenommen wird, eine auf das Transportfahrzeug ausgerichtete Leuchte eingeschaltet. Bei Verstellung eines Pfluges an einem Traktor werden die als passive optische Elemente dienenden Spiegel selbsttätig auf die erwartete Pflugspur ausgerichtet, und im Fall einer Anbringung eines Schneidwerks an einem Mähdrescher wird der Kupplungsbereich zwischen Schneidwerk und Mähdrescher selbsttätig beleuchtet. Wie selbsttätig erkannt werden soll, dass das Schneidwerk angebracht wird, ist nicht im Detail offenbart.

Die EP 2 746 105 A1 beschreibt eine Arbeitsmaschine mit einer fremdkraftbetätigten verstellbaren Arbeitsausrüstung. Eine Beleuchtungseinrichtung zur Beleuchtung des Arbeitsbereichs der Arbeitsausrüstung wird mittels einer Steuereinrichtung derart kontrolliert, dass basierend auf dem Lenkwinkel der Arbeitsmaschine die Beleuchtungseinrichtung abgeblendet wird, wenn die Arbeitsausrüstung oder ein Teil der Arbeitsmaschine das Licht in Richtung des Bedienerarbeitsplatzes reflektieren würde.

Ein gattungsgemäßer Ackerschlepper ist aus EP 2 402 213 bekannt.

### Aufgabe

Das der Erfindung zu Grunde liegende Problem wird darin gesehen, dem Bediener eines Arbeitsfahrzeugs eine optische Kontrolle eines im Stand der Technik nicht hinreichend beleuchteten, verstellbaren Betriebselements des Arbeitsfahrzeugs insbesondere bei Dunkelheit oder Dämmerung zu erleichtern.

### Lösung

Die vorliegende Erfindung wird durch die Patentansprüche definiert.

Ein landwirtschaftliches Arbeitsfahrzeug in Form eines Ackerschleppers umfasst eine Beleuchtungseinrichtung, die einer mit Koppelpunkten ausgestatteten Dreipunktkupplung zur Anbringung eines Geräts am Arbeitsfahrzeugs zugeordnet ist, deren Position durch einen fremdkraftbetätigten Aktor verstellbar ist, und eine mit der Beleuchtungseinrichtung verbundene Steuereinrichtung, der eine mittels eines Sensors erfasste Information hinsichtlich der Stellung der Dreipunktkupplung und/oder eine Information hinsichtlich eines mit einer Bedienereingabeeinrichtung eingebbaren Kontrollsignals zur Ansteuerung des Aktors zuführbar ist. Die Steuereinrichtung ist eingerichtet, anhand einer anhand des Signals des Sensors und/oder des Kontrollsignals erkannten Verstellung der Dreipunktkupplung die Beleuchtungseinrichtung einzuschalten. Die Beleuchtungseinrichtung ist derart konfiguriert, dass ein von ihr ausgehender Lichtkegel bei eingeschalteter Beleuchtungseinrichtung die Dreipunktkupplung und ihre Koppelpunkte beleuchtet. Die Steuereinrichtung ist derart eingerichtet, dass sie die Beleuchtungseinrichtung nach dem detektierten Ende der Verstellung der Dreipunktkupplung noch für eine vorgegebene Zeitdauer eingeschaltet lässt und dann die Beleuchtungseinrichtung abschaltet.

Auf diese Weise erreicht man, dass automatisch eine Beleuchtung des verstellten Betriebselements erfolgt, die dem Bediener die optische Überwachung des Verstellvorgangs des Betriebselements wesentlich erleichtert. Auch wird die Arbeitssicherheit verbessert.

Bei einer möglichen Ausführungsform kann der Steuereinrichtung eine sensorisch erfasste Information hinsichtlich der Stellung des durch Fremdkraft betätigten Betriebselements zuführbar sein. Die jeweilige Stellung des Betriebselements wird demnach durch einen mit der Steuereinrichtung verbundenen Sensor erfasst. Sobald das Betriebselement verstellt wird, ändert sich das Signal des Sensors und die Steuereinrichtung aktiviert die Beleuchtungseinrichtung. Der Sensor kann bei einem fremdkraftbetätigten Betriebselement einen Rückkopplungswert an eine Regelung zur Kontrolle der Position des Betriebselements liefern. Diese Regelung kann durch die Steuerung oder eine davon getrennte Regeleinrichtung erfolgen.

Bei einer anderen Ausführungsform ist der Steuereinrichtung eine Information hinsichtlich eines Kontrollsignals zur Ansteuerung eines fremdkraftbetätigten Aktors zur Verstellung des Betriebselements zuführbar. Diese Ausführungsformen kann mit der zuvor erwähnten Ausführungsform kombiniert werden, z.B. wenn das Betriebselement sowohl fremdkraftbetätigt als auch manuell verstellbar ist.

Die Steuereinrichtung kann weiterhin mit einer Einrichtung zur Erfassung der Intensität des Umgebungslichts verbunden und betreibbar sein, die Beleuchtungseinrichtung basierend auf Signalen der Einrichtung zur Erfassung der Intensität des Umgebungslichts nur bei Dämmerung oder Dunkelheit zu aktivieren.

Die Bedienereingabeeinrichtung kann fest am Bedienerarbeitsplatz des Arbeitsfahrzeugs oder dem Betriebselement benachbart, fest am Arbeitsfahrzeug angebracht oder ein Handgerät sein.

### Ausführungsbeispiel

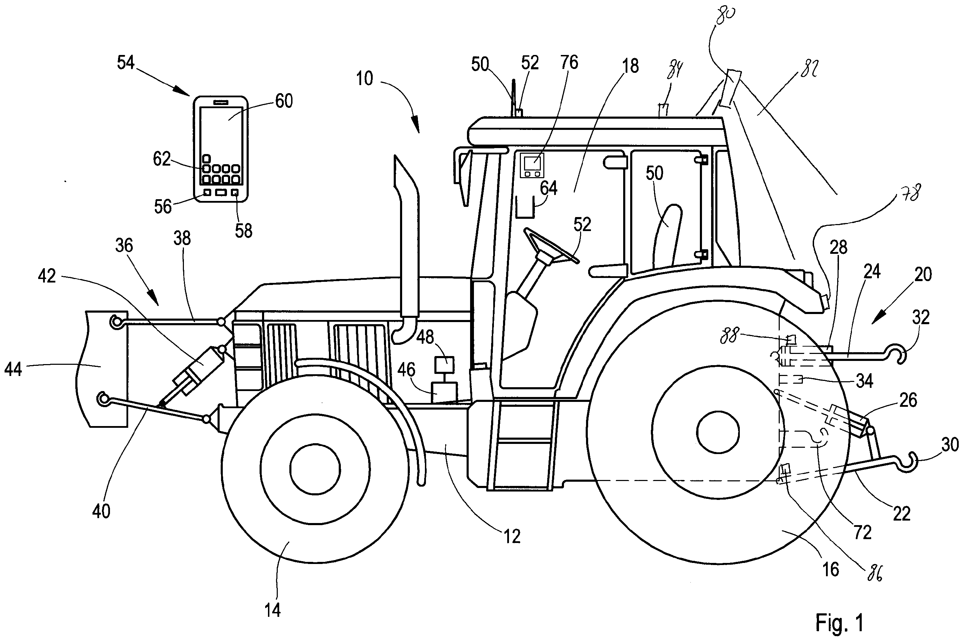

In der Figur 1, die eine seitliche Ansicht eines Arbeitsfahrzeugs in Form eines Ackerschleppers zeigt, ist ein nachfolgend näher beschriebenes Ausführungsbeispiel der Erfindung dargestellt.

In der Figur 1 ist ein landwirtschaftliches Arbeitsfahrzeug 10 in Form eines Ackerschleppers dargestellt, der sich auf einem Rahmen 12 aufbaut und durch vordere, lenkbare Räder 14 und antreibbare, rückwärtige Räder 16 auf dem Boden abstützt. Der Bedienerarbeitsplatz befindet sich in einer Kabine 18.

Am rückwärtigen Ende des Rahmens 12 ist eine hintere Dreipunktkupplung 20 angeordnet, die sich aus zwei nebeneinander angeordneten, unteren Lenkern 22 und einem oberen Lenker 24 zusammensetzt. Die unteren Lenker 22 sind durch Aktoren 26 in Form von Hydraulikzylindern höhenverstellbar. Der obere Lenker 24 ist durch einen Aktor 28 in Form eines Hydraulikzylinders längenveränderbar. Durch Verstellung der Aktoren 26 können die rückwärtigen Enden der unteren Lenker 22 in eine Position verbracht werden, in der sie mit einem beliebigen Gerät (nicht gezeigt) gekoppelt werden können. Am rückwärtigen Ende der unteren Lenker 22 sind in an sich bekannter Weise Koppelpunkte 30 in Form von sich nach oben erstreckenden Fanghaken (oder beliebiger anderer Koppelpunkte, z. B. Koppelaugen, wie sie in der DIN ISO 730-1 Landmaschinen und Traktoren - Heck-Dreipunktanbau - Teil 1: Kategorien 1, 2, 3 und 4 beschrieben werden) angeordnet, während am rückwärtigen Ende des oberen Lenkers 24 ein ebenfalls konventioneller Oberlenker-Koppelpunkt 32 vorgesehen ist.

An der Rückseite des Rahmens 12 ist weiterhin eine Zapfwelle 34 zum Antrieb beweglicher Elemente des Geräts angebracht.

Am vorderen Ende des Rahmens 12 ist eine vordere Dreipunktkupplung 36 angeordnet, die zwei untere Lenker 40 umfasst, die jeweils mittels eines Aktors 42 höhenverstellbar sind. Außerdem umfasst die vordere Dreipunktkupplung 36 einen oberen Lenker 38, der hier als nichtlängenverstellbar dargestellt ist. Die Lenker 38, 40 sind mit einem Gerät 44 beliebiger Art verbunden.

Eine Steuereinrichtung 46 ist elektrisch mit einer Ventileinheit 48 verbunden, die wiederum u.a. die Aktoren 26, 28, 42 hydraulisch kontrolliert. Die Steuereinrichtung 46 ist außerdem mit einem Sende- und Empfangsmodul 52 verbunden, das eine Antenne 50 umfasst.

Ein tragbares Handgerät 54 umfasst einen Prozessor 56, ein Sende- und Empfangsmodul 58, eine vorzugsweise berührungsempfindliche Anzeigeeinrichtung 60 und eine Tastatur 62. Der Prozessor 56 kommuniziert über das Sende- und Empfangsmodul 58 und das Sende- und Empfangsmodul 52 mit der Steuereinrichtung 46, um Befehle für die Aktoren 26, 28, 42, die über die als Eingabemittel dienende Tastatur 62 und/oder die berührungsempfindliche Anzeigeeinrichtung 60 eingegeben werden, an das Arbeitsfahrzeug 10 zu übersenden. Die Sende- und Empfangsmodule 52, 58 können über einen beliebigen Standard (z.B. für Mobiltelefone, wie GSM oder UMTS; oder Computer-Netzwerke, z.B. WLAN oder Bluetooth) miteinander kommunizieren.

Das Handgerät 54 kann als kommerziell verfügbarer Tablet-Computer oder als Smartphone ausgeführt sein. Um die beschriebene Funktion auszuführen, läuft auf ihm eine Software, die als App in an sich bekannter Weise nach einer Authentisierung von einer Internetadresse heruntergeladen wurde. Falls das Handgerät 54 nicht als Fernbedienung benötigt wird, kann es in eine Halterung 64 in der Kabine 18 eingesteckt werden, die als Docking-Station dient und in der die Akkus des Handgeräts 54 geladen werden. In der Halterung 64 kann das Handgerät 54 als Eingabeeinrichtung zur Kontrolle beliebiger Funktionen des Arbeitsfahrzeugs 10 dienen und insbesondere ein virtuelles Terminal nach ISO 11783 emulieren.

Das Handgerät 54 kann als Fernbedienung genutzt werden, um das Ankoppeln eines Geräts 44 an eine der Geräte-Schnittstellen des Arbeitsfahrzeugs 10 zu erleichtern. Das Arbeitsfahrzeug 10 wird demnach zunächst in die Nähe des Geräts 44 gefahren, bis er hinreichend nahe am Gerät 44 steht, um es anzukoppeln. Dann verlässt der Bediener mit dem Handgerät 54 seinen Bedienerarbeitsplatz in der Kabine 18 und begibt sich in die Nähe der jeweils betroffenen Schnittstelle. Dann betätigt er die Eingabemittel des Handgeräts 54, um die Lenker 22, 24, 38, 40 in eine geeignete Position zu verbringen und verriegelt schließlich das Gerät 44 an den Lenkern 22, 24 oder 38, 40 an, sei es manuell oder durch weitere, mittels des Handgeräts 54 über den beschriebenen Weg kontrollierte Aktoren (nicht gezeigt). Analog kann auch die Zapfwelle 34 über das Handgerät 54 ein- und ausgeschaltet oder ein Zapfwellengetriebe in eine Neutralstellung verbracht werden. Zudem kann auch eine feste oder verstellbare Kupplung 72 für eine Deichsel über den Computer 54 geöffnet und geschlossen und ggf. in ihrer Position verstellt werden.

Die Verstellung der Aktoren 26, 28, 42 kann auch über eine fest in der Kabine 18 installierte, mit der Steuereinheit 46 verbundene Bedienerschnittstelle 76 erfolgen, oder durch mit der Steuereinheit 46 verbundene Tastschalter 78 am hinteren Kotflügel.

Um dem Bediener das Ankoppeln des Geräts an die hintere Dreipunktkupplung 20 zu erleichtern, ist oben an der Kabine 18 eine Beleuchtungseinrichtung 80 angebracht, die durch das Bordnetz des Arbeitsfahrzeugs 10 betrieben und durch die Steuereinrichtung 46 kontrolliert wird. Ein von der Beleuchtungseinrichtung 80 ausgehender Lichtkegel 82 beleuchtet, wenn die Beleuchtungseinrichtung eingeschaltet ist, die Dreipunktkupplung 20 und insbesondere ihre Koppelpunkte 30, 32. Wenn eine mit der Steuereinrichtung 46 verbundene Einrichtung 84 zur Erfassung der Intensität des Umgebungslichts der Steuereinrichtung 46 signalisiert, dass das vorhandene Tages- oder Umgebungslicht nicht hinreichend hell (z.B. so hell wie das Licht der Beleuchtungseinrichtung 80 an den Koppelpunkten 30, 32) ist, und einer der Aktoren 26, 28 verstellt wird, aktiviert die Steuereinrichtung 46 die Beleuchtungseinrichtung 80. Diese Ansteuerung kann auf den an die Steuereinrichtung 46 gehenden Stellbefehlen beruhen, die vom Handgerät 54 oder von der Bedienerschnittstelle 76 oder einem der Tastschalter 78 an die Steuereinrichtung 46 gehen, oder auf Signalen von Sensoren 86, 88 beruhen, welche die Stellung der Aktoren 26, 28 erfassen und zu Regelungs- und/oder Anzeigezwecken an die Steuereinrichtung 46 signalisieren. Nach der letzten Verstellung lässt die Steuereinrichtung 46 die Beleuchtungseinrichtung 80 noch eine gewisse Zeit lang an und schaltet sie dann ab.

Es wäre auch möglich, eine analoge Beleuchtungseinrichtung (nicht gezeigt) auf die vordere Dreipunktkupplung 36 auszurichten und bei Verstellung der vorderen Dreipunktkupplung zu aktivieren, oder die gezeigte Beleuchtungseinrichtung 80 durch die Steuereinrichtung 46 mittels eines geeigneten Antriebs zu verstellen und bei Bedarf auf die vordere Dreipunktkupplung auszurichten.

## Patentansprüche

1. Landwirtschaftliches Arbeitsfahrzeug (10) in Form eines Ackerschleppers, umfassend:
eine Beleuchtungseinrichtung (80), die einer mit Koppelpunkten (30, 32) ausgestatteten Dreipunktkupplung (20) zur Anbringung eines Geräts am Arbeitsfahrzeugs (10) zugeordnet ist, deren Position durch einen fremdkraftbetätigten Aktor (26, 28) verstellbar ist, und
eine mit der Beleuchtungseinrichtung (80) verbundene Steuereinrichtung (46), der eine mittels eines Sensors (86, 88) erfasste Information hinsichtlich der Stellung der Dreipunktkupplung (20) und/oder eine Information hinsichtlich eines mit einer Bedienereingabeeinrichtung (54, 76, 78) eingebbaren Kontrollsignals zur Ansteuerung des Aktors (26, 28) zuführbar ist, **dadurch gekennzeichnet, dass**
die Steuereinrichtung (46) eingerichtet ist, anhand einer anhand des Signals des Sensors (86, 88) und/oder des Kontrollsignals erkannten Verstellung der Dreipunktkupplung (20) die Beleuchtungseinrichtung (80) einzuschalten,
wobei die Beleuchtungseinrichtung (80) derart konfiguriert ist, dass ein von ihr ausgehender Lichtkegel (82) bei eingeschalteter Beleuchtungseinrichtung (80) die Dreipunktkupplung (20) und ihre Koppelpunkte (30, 32) beleuchtet,
und wobei die Steuereinrichtung (46) eingerichtet ist, die Beleuchtungseinrichtung (80) nach dem detektierten Ende der Verstellung der Dreipunktkupplung (20) noch für eine vorgegebene Zeitdauer eingeschaltet zu lassen und dann die Beleuchtungseinrichtung (80) abzuschalten.

2. Landwirtschaftliches Arbeitsfahrzeug (10) nach Anspruch 1, wobei die Steuereinrichtung (46) mit einer Einrichtung (84) zur Erfassung der Intensität des Umgebungslichts verbunden und eingerichtet ist, die Beleuchtungseinrichtung (80) basierend auf Signalen der Einrichtung (84) zur Erfassung der Intensität des Umgebungslichts nur bei Dämmerung oder Dunkelheit zu aktivieren.

3. Landwirtschaftliches Arbeitsfahrzeug (10) nach Anspruch 1, wobei die Bedienereingabeeinrichtung (54, 76, 78) fest am Bedienerarbeitsplatz des Arbeitsfahrzeugs (10) oder dem Betriebselement benachbart fest am Arbeitsfahrzeug (10) angebracht oder ein Handgerät (54) ist.

## Claims

1. Agricultural work vehicle (10) in the form of an agricultural tractor, comprising:
a lighting device (80) which is assigned to a three-point linkage (20) which is equipped with coupling points (30, 32) and is intended for attaching an implement to the work vehicle (10) and whose position can be adjusted by an actuator (26, 28) which is activated by extraneous force, and
a control device (46) which is connected to the lighting device (80) and to which information acquired by means of a sensor (86, 88) and relating to the position of the three-point linkage (20) and/or information relating to a control signal which can be input with an operator control input device (54, 76, 78) and is intended for actuating the actuator (26, 28) can be fed,
**characterized in that**
the control device (46) is configured to switch on the lighting device (80) on the basis of an adjustment of the three-point linkage (20) which is detected on the basis of the signal of the sensor (86, 88) and/or of the control signal,
wherein the lighting device (80) is configured in such a way that a light cone (82) which is emitted thereby when the lighting device (80) is switched on illuminates the three-point linkage (20) and its coupling points (30, 32),
and wherein the control device (46) is configured to leave the lighting device (80) switched on still for a predefined period after the detected end of the adjustment of the three-point linkage (20) and then to switch off the lighting device (80).

2. Agricultural work vehicle (10) according to Claim 1, wherein the control device (46) is connected to a device (84) for sensing the intensity of the ambient light, and is configured to activate the lighting device (80) on the basis of signals of the device (84) for sensing the intensity of the ambient light only when at dusk or dawn or in the dark.

3. Agricultural work vehicle (10) according to Claim 1, wherein the operator control input device (54, 76, 78) is permanently attached to the operator work station of the work vehicle (10) or is permanently attached to the work vehicle (10) adjacent to the operating element or is a hand-held implement (54).

## Revendications

1. Véhicule de travail agricole (10) sous la forme d'un tracteur agricole, comprenant :
un dispositif d'éclairage (80) qui est associé à un accouplement à trois points (20) muni de points de couplage (30, 32) pour le montage d'un appareil sur le véhicule de travail (10), dont la position peut être réglée par un actionneur (26, 28) pouvant être actionné par une force extérieure, et
un dispositif de commande (46) connecté au dispositif d'éclairage (80), auquel peut être envoyée une information détectée au moyen d'un capteur (86, 88) concernant la position de l'accouplement à trois points (20) et/ou une information concernant un signal de contrôle pouvant être saisi avec un dispositif de saisie par l'opérateur (54, 76, 78) pour la commande de l'actionneur (26, 28),
**caractérisé en ce que** le dispositif de commande (46) est prévu pour allumer le dispositif d'éclairage (80) à l'aide d'un réglage de l'accouplement à trois points (22) reconnu à l'aide du signal du capteur (86, 88) et/ou du signal de contrôle,
le dispositif d'éclairage (80) étant configuré de telle sorte qu'un cône de lumière (82) sortant de celui-ci lorsque le dispositif d'éclairage (80) est allumé éclaire l'accouplement à trois points (20) et ses points de couplage (30, 32),
et le dispositif de commande (46), après la détection de la fin du réglage de l'accouplement à trois points (20), étant prévu pour laisser allumé le dispositif d'éclairage (80) encore pendant une période de temps prédéfinie puis pour éteindre le dispositif d'éclairage (80).

2. Véhicule de travail agricole (10) selon la revendication 1, dans lequel le dispositif de commande (46) est connecté à un dispositif (84) pour détecter l'intensité de la lumière environnante et est prévu pour activer le dispositif d'éclairage (80) sur la base de signaux du dispositif (84) pour détecter l'intensité de la lumière environnante uniquement si elle s'atténue ou s'il fait sombre.

3. Véhicule de travail agricole (10) selon la revendication 1, dans lequel le dispositif de saisie par l'opérateur (54, 76, 78) est monté fixement sur le poste de travail d'opérateur du véhicule de travail (10) ou à côté de l'élément fonctionnel sur le véhicule de travail (10) ou est un appareil à main (54).
